Europäisches Patentamt

European Patent Office

Office européen des brevets

(19)

(11) Veröffentlichungsnummer: **0 012 714**
**B1**

(12) # EUROPÄISCHE PATENTSCHRIFT

(45) Veröffentlichungstag der Patentschrift:
**23.03.83**

(21) Anmeldenummer: **79810137.4**

(22) Anmeldetag: **24.10.79**

(51) Int. Cl.³: **C 08 L 63/02,** C 08 G 59/62

(54) **Epoxidformmassen, aus ihnen hergestellte Formkörper und ihre Verwendung.**

(30) Priorität: **30.10.78 CH 11174/78**

(43) Veröffentlichungstag der Anmeldung:
**25.06.80 Patentblatt 80/13**

(45) Bekanntmachung des Hinweises auf die Patenterteilung:
**23.03.83 Patentblatt 83/12**

(84) Benannte Vertragsstaaten:
**AT BE DE FR GB IT NL SE**

(56) Entgegenhaltungen:
**AT-B-318 923**
**DE-B-1 184 496**
**US-A-3 884 992**
**GB-A-985 843**

(73) Patentinhaber: **CIBA-GEIGY AG, Patentabteilung**
**Postfach, CH-4002 Basel (CH)**

(72) Erfinder: **Schreiber, Bruno, Dr., Herrenweg 8,**
**CH-4147 Aesch (CH)**

BUNDESDRUCKEREI BERLIN

# 0 012 714

### Epoxidformmassen, aus ihnen hergestellte Formkörper und ihre Verwendung

Die vorliegende Erfindung betrifft Epoxidformmassen, die ein Epoxidharzaddukt, einen Härtungsbeschleuniger, einen Füllstoff und als Härter ein aromatisches Polyol enthalten.

Epoxidformmassen haben zwischenzeitlich auf Grund ihrer guten Eigenschaften vielfältige Verwendung in der Technik gefunden. Aus wirtschaftlichen und verarbeitungstechnischen Gründen sind oft feste rieselfähige und lagerbeständige Epoxidformmassen gewünscht. Je nach Wahl der Grundbestandteile Harz und Härter ergibt sich hierbei eine besondere Eignung für bestimmte Anwendungszwecke. Weitere Abwandlungen werden dann oft durch den Zusatz von Zuschlagstoffen vorgenommen, wodurch eine Verbesserung von mechanischen und elektrischen Eigenschaften sowie der Verarbeitungseigenschaften erzielt wird.

Für die Herstellung von Formkörpern aus Epoxidformmassen ist es von erheblicher Bedeutung, daß sie eine hohe Entformungssteifigkeit besitzen, damit ein unwirtschaftlicher Zeitaufwand für die Abkühlung der Formlinge bzw. deren Verformung weitgehend vermieden wird.

Sofern die Formkörper bei Anwendungen einer Temperaturbelastung über längere Zeit ausgesetzt sind, ist es auch erforderlich, daß sie eine hohe Dauerwärmebeständigkeit aufweisen, damit die mechanischen Eigenschaften während der Gebrauchsdauer weitgehend erhalten bleiben.

Epoxidformmassen haben in der Elektrotechnik eine besondere Bedeutung erlangt, da sie die gestellten Anforderungen allgemein erfüllen. Die Rißbeständigkeit von Formteilen aus gefüllten Epoxidformmassen, besonders bei umhüllten Metallteilen, wird in der Praxis aber noch als ungenügend empfunden. Eine hohe Rißbeständigkeit ist aber für eine dauerhafte Schutzfunktion der Umhüllung Voraussetzung. Die Rißbildung kann bei oder nach der Entformung bzw. Abkühlung, Lagerung oder dem Gebrauch der Formteile auftreten.

In der AT-B-318 923 sind Epoxidharzpreßmassen aus (a) einem freie Epoxidgruppen aufweisenden Voraddukt aus Epoxydharzen mit Polyaminen als Epoxydharz, (b) einem freie Aminogruppen aufweisenden Voraddukt aus einem Polyamin mit Polyglycidylverbindungen und (c) einem mineralischen Füllstoff beschrieben. Es wurde gefunden, daß Formteile aus diesen Preßmassen eine ungenügende Rißbeständigkeit aufweisen. In der DE-B-1 184 496 sind härtbare Formmassen aus Polyglycidyläthern von Novolaken beschrieben, die als Härter Novolake enthalten. Gehärtete Formkörper daraus weisen eine verbesserte Wärmestandfestigkeit und Wärmeformbeständigkeit auf. Die US-A-3 884 992 offenbart Zusammensetzungen aus Epoxidharzen mit Polyhydroxystyrolen als Härtern. Addukte von Bisphenoldiglycidyläthern mit aromatischen Diaminen sind als mögliche Epoxydharzkomponente nicht erwähnt.

Aufgabe vorliegender Erfindung ist es, eine feste, leicht verarbeitbare, lagerstabile und schnell härtende Epoxidformmasse bereitzustellen, aus der Formteile mit hoher Rißbeständigkeit, hoher Dauerwärmebeständigkeit und guter Entformungssteifigkeit erhalten werden.

Gegenstand vorliegender Erfindung ist eine Epoxidformmasse aus (a) einem festen, einen Schmelzpunkt von mindestens 50°C aufweisenden Epoxidharz, das ein Addukt aus einem niedermolekularen Diglycidyläther der Bisphenole und einem aromatischen Diamin ist und das mindestens 2,0 Epoxidäquivalente pro kg Harz enthält, wobei gegebenenfalls bis zu 50% des Epoxidharzes (a) durch andere, bei Zimmertemperatur feste Epoxidharze ersetzt werden können, (b) einem Härter, (c) mindestens einem Härtungsbeschleuniger und (d) mindestens einem Füllstoff in einer Menge von 10 bis 80 Gew.-%, bezogen auf die Formmasse, dadurch gekennzeichnet, daß als Härter (b) mindestens ein aromatisches Polyol mit mehr als 5 Hydroxyläquivalenten pro kg Polyol und mit einem Schmelzpunkt von mindestens 50°C in einer Menge einverleibt ist, daß auf eine Epoxidgruppe 0,5 bis 1,5 Hydroxylgruppen entfallen.

Das als Härter (b) eingesetzte aromatische Polyol ist vorzugsweise ein von einem aromatischen Kohlenwasserstoff, insbesondere ein vom Phenol abgeleitetes Polyol.

Eine besonders bevorzugte Gruppe an Härtern sind die als Novolake bekannten, im sauren Reaktionsmedium erhaltenen Umsetzungsprodukte von Phenolen mit Aldehyden. Geeigneten Phenole sind neben dem Phenol selbst noch z. B. Kresole, Xylenole und Resorcin, die einzeln oder gemischt verwendet werden. Als Aldehyd wird neben Acetaldehyd hauptsächlich Formaldehyd eingesetzt.

Eine andere Gruppe von Polyolhärtern sind monomere oder polymere hydroxyphenylierte Kohlenwasserstoffe, wobei der Kohlenwasserstoffrest z. B. 2 bis 10, besonders 2 bis 4 C-Atome enthalten kann. Beispiele sind 1,1,2,2-Tetraphenyloläthan, 1,1,3-Triphenylolpropan und Poly-p-Vinylphenol.

In manchen Fällen ist es zweckmäßig, die als Härter verwendeten Novolake mit anderen aromatischen oder auch aliphatischen Polyolen abzumischen, z. B. mit Diolen wie Bisphenol-A, Resorcin usw. und diese Mischungen als Härter einzusetzen.

Bei den verwendeten Epoxidharzen (a), die vorzugsweise einen Schmelzpunkt von mindestens 60°C und einen Epoxidgruppengehalt von mindestens 2,5 Äquivalenten pro kg Harz aufweisen, handelt es sich um bekannte Addukte, die z. B. in den amerikanischen Patenten 3 409 591, 3 454 421, 3 533 985, 3 963 666 und 3 996 175 beschrieben sind.

Zu ihrer Herstellung geht man von niedermolekularen, flüssigen bis halbflüssigen Diglycidyläthern

2

von Bisphenolen, besonders von Bisphenol-A aus, die bevorzugt mehr als 4,5 Epoxidgruppenäquivalente pro kg aufweisen. Durch eine Kettenverlängerung mit einem aromatischen Diamin werden sie in eine feste, aber noch reaktionsfähige Form überführt. Geeignete aromatische Diamine sind in den zuvor erwähnten Patenten beschrieben. Als Beispiele seien erwähnt: Diaminodiphenylalkane, -alkylidene, -äther, -thioäther oder -sulfone wie 4,4'-Diaminodiphenylmethan, 2,2-Bis-(4'-aminophenyl)propyliden, 4,4'-Diaminodiphenyläther, -thioäther oder -sulfon, 4',4'-Diamino-3,3'-dichlordiphenylmethan, m-, o- oder p-Phenyldiamin, Toluidin, phenylsubstituierte Alkylendiamine wie zum Beispiel 1,2-Diamino-1,2-diphenyläthan.

Zur Modifizierung und zur Erzielung gewünschter Eigenschaften können bis zu 50% des Epoxidharzes (a) durch ein oder mehrere bei Zimmertemperatur feste Epoxidharze ersetzt werden. Beispiele sind Glycidyläther der Novolake und Bisphenole, N-Glycidylverbindungen wie Triglycidylisocyanurat und Glycidylhydantoine, Polyglycidylester und halogenhaltige Epoxidharze z. B. auf der Basis von Tetrabrombisphenol-A.

Die Härtungsbeschleuniger (c) werden im allgemeinen in Mengen von 0,1 bis 5, vorzugsweise 0,1 bis 2 Gew.-% eingesetzt, bezogen auf die Formmasse. Geeignet sind jene Verbindungen, die die Härtungsreaktion zu beschleunigen vermögen. Beispiele sind:

Imidazol und seine Homologen sowie deren Salze mit Polycarbonsäuren bzw. deren Anhydriden wie Imidazol, 1-Methylimidazol, 2-Äthylimidazol, 2-Methyl-4-äthylimidazol, 2-Phenylimidazol, Benztriazol, organische Phosphorverbindungen, BF$_3$- oder BCl$_3$-Komplexe, organische Phosphoniumborate, Alkylammoniumhalogenide (z. B. die Chloride und Bromide) wie Tetramethylammoniumchlorid, Harnstoffe und Derivate, wie N-p-Chlorphenyl-N,N'-dimethylharnstoff. Bevorzugt sind die Imidazole.

Die Füllstoffe können in Mengen von 10 bis 80, bevorzugt 30 bis 80 und besonders 50 bis 80 Gew.-% enthalten sein, bezogen auf die Formmasse.

Das als Füllstoff bevorzugt verwendete Wollastonit ist ein natürlich vorkommendes und käufliches Kalziummetasilikat, dessen wäßriger Auszug (24 h) basisch reagiert. Dieser Füllstoff macht vorzugsweise mindestens Zweidrittel, besonders mindestens Dreiviertel der Gesamtfüllstoffmenge aus und kann auch alleine als Füllstoff eingesetzt werden.

Geeignete andere Füllstoffe, die alleine oder neben Wollastonit enthalten sein können, sind z. B. Textilfasern, Glasfasern, Asbestfasern, Borfasern, Kohlenstoffasern, Glaspulver, Glaskugeln, Quarzmehl, Quarzgutmehl (kristallin-amorphes Quarzmehl); mineralische Silikate wie Glimmer, Asbestmehl, Schiefermehl; Kaolin, Aluminiumoxidtrihydrat, Kreidemehl, Gips, Antimontrioxid, Bentone, Kieselsäureaerogel (Aerosile), Lithopone, Schwerspat, Titandioxid, Ruß, Graphit, Bolus Alba, Antimontrioxid, Oxidpigmente, z. B. Eisenoxid, oder Metallpulver wie Aluminium- oder Eisenpulver. Für Anwendungen in der Elektrotechnik sollen Strom leitende Füllstoffe vermieden werden.

In einer bevorzugten Formmasse sind 50 bis 70 Gew.-% Wollastonit und bis zu 20 Gew.-% eines weiteren Füllstoffes enthalten, besonders Glasfasern oder Quarzmehl.

Die erfindungsgemäßen Epoxidformmassen können vor der Härtung in irgendeiner Phase mit üblichen Modifizierungsmitteln außer den Füllstoffen versetzt werden, wie z. B. Farbstoffen, Pigmenten, Härtungsbeschleunigern, Weichmachern, Verlaufmitteln, Thixotropiermitteln, Formtrennmittel, Haftvermittler zwischen Füllstoffen und Harz, flammhemmenden Stoffen wie organischen Halogenverbindungen mit oder ohne Antimontrioxid, und auch andere Kunstharze wie Phenoplaste und Aminoplaste, besonders bis zu 8 Gew.-% Melaminformaldehydharz, um die Haftfestigkeit bei umhüllten Formteilen zu verbessern. Andere mögliche Kunstharze sind z. B. Polyurethane und Silikone.

Die Herstellung der erfindungsgemäßen Epoxidformmassen kann in üblicher Weise mit Hilfe bekannter Mischaggregate (z. B. Extruder, Rührer, Kneter, Walzenstühlen, Mühlen) erfolgen. So kann man z. B. die Einzelkomponenten, gegebenenfalls nach vorherigem Mahlen intensiv miteinander vermischen (Trockenverfahren). Die Vermischung kann aber auch in einem Kneter erfolgen, wobei man ein Granulat erhält. Vorzugsweise wurden die Formmassen im Schmelzverfahren (Kneter oder Extruder) bei Temperaturen von 80 bis 120° C hergestellt.

Die festen erfindungsgemäßen Epoxidformmassen können nach üblichen Verfahren unter Aushärtung zu Formteilen aller Art verarbeitet werden. Die Härtungstemperatur liegt hierbei im allgemeinen zwischen 140 und 200° C, vorzugsweise 150 bis 190° C. Besonders geeignet ist die Formmasse zur Verarbeitung nach Preßverfahren. Die Formmassen dienen zur Herstellung hochwertiger Formteile, insbesondere auf dem Gebiet der Elektrotechnik. Mit diesen Formmassen können z. B. problemlos Metallteile umhüllt werden.

Die erfindungsgemäßen Epoxidformmassen stellen rieselfähige, gut lagerstabile, und überraschend schnellhärtende Formmassen dar, die problemlos verarbeitbar sind. Formteile daraus weisen gute mechanische Eigenschaften und eine außerordentlich hohe Rißbeständigkeit auf, sowie eine hohe Dauerwärmebeständigkeit und Entformungssteifigkeit.

Die nachfolgenden Beispiele erläutern die Erfindung näher.

**0 012 714**

Beispiele 1 bis 7 und Vergleichsbeispiele I bis V

A) Ausgangsprodukte und Herstellung der Formmassen

Epoxidharz A (nach US-A-3 996 175)

1000 g eines flüssigen Bisphenol-A-Epoxidharzes mit einem Gehalt von 5,35 Epoxidäquivalenten/kg und einer Viskosität bei 25°C von 13 500 mPas werden in einem 2-Liter-Reaktionsgefäß vorgelegt und im Ölbad auf 140°C erwärmt. Während 45 min werden 100 g 4,4'-Diaminodiphenylmethan (10,00 NH$_2$/kg) in aufgeschmolzener Form 100°C warm eingemischt. Die Zugabegeschwindigkeit wird so geregelt, daß die Temperatur der Reaktionsmischung nicht über 150°C steigt. Nach weiteren 30 min Erwärmung bei derselben Temperatur wird die erhaltene viskose Flüssigkeit abgekühlt und das hellgelbe, harzartige und spröde Produkt zermahlen. Eigenschaften des Produktes:

| | |
|---|---|
| Epoxidgehalt/kg | 3,00 |
| Schmelzpunkt (nach Kofler) | 72°C |

Epoxidharz B

Glycidylisierter Cresolnovolak mit 4,3 Epoxidäquivalenten per kg und einem Schmelzpunkt nach Kofler von 79°C.

Epoxidharz C

Bisphenol-A-Epoxidharz mit 1,1 Epoxidäquivalenten per kg mit einem Schmelzpunkt nach Kofler von 85°C.

Härter A

Fester Cresolnovolak mit 8,5 Hydroxyläquivalenten pro kg und einem Schmelzpunkt nach Kofler von 90°C.

Härter B

1,1,3-Triphenylolpropan mit 8,9 Hydroxylgruppenäquivalenten pro kg und einem Schmelzpunkt von 87°C (Kofler-Bank).

Härter C

1300 g 4,4'-Diaminodiphenylmethan werden in einem 3-l-Reaktionskolben auf 140°C erwärmt. Im Verlaufe von 50 min werden 1000 g flüssiges Bisphenol-A-Epoxidharz (5,35 Epoxidgruppenäquivalente pro kg, Viskosität bei 25°C 13 500 mPas) unter ständigem Rühren tropfenweise so hinzugefügt, daß die Temperatur der Mischung nicht 170°C übersteigt. Die Mischung wird dann noch 30 min bei 140°C gehalten und das Produkt danach abgekühlt und gemahlen.
Eigenschaften:

| | |
|---|---|
| Aminogruppenäquivalente pro kg | 4,45 |
| Erweichungspunkt | 57°C |
| Schmelzpunkt | 70°C |

Härter D

476,8 g (2 Mol) 4,4'-Diamino-3,3'-dimethyldicyclohexylmethan werden in einem 1-l-Reaktionskolben auf 130°C erwärmt. Während ca. 30 Minuten werden 284,3 g (1 Mol) Diglycidylester der 1,2-Cyclohexandicarbonsäure zugegeben und dann noch 30 Minuten bei 130°C gehalten. Das erhaltene Produkt wird abgekühlt und gemahlen.
Eigenschaften:

4

| | |
|---|---|
| Aminogruppenäquivalente | 5,94 |
| Erweichungspunkt | 60°C |
| Schmelzpunkt | 73°C |

### Härter E

400 g Tetrachlorphthalsäureanhydrid und 600 g Quarzmehl werden 13 h in einer Kugelmühle vermahlen und gemischt.

### Härter F

Härter F ist 1,1,2,2-p-Tetraphenyloläthan mit 7,7 Hydroxiäquivalenten und einem Schmelzpunkt nach Kofler von 112°C.

### Beschleuniger

25 Gewichtsteile 2-Äthylimidazol werden in bei 140°C aufgeschmolzenem Cresolnovolak gelöst und nach dem Abkühlen zermahlen. Der Schmelzpunkt nach Kofler beträgt 68°C.

### Die Herstellung der Formmassen

Die Rohstoffe gemäß Tabelle 2 werden in einer Gesamtmenge von 3 kg in einem gekühlten Laborschnellmischer eingewogen und 2 min bei einer Drehzahl von 1400 c/min homogenisiert. Diese Vormischung wird in einem Labor-Ko-Kneter bei 100°C Zylindertemperatur verschmolzen und geknetet. Die austretende Masse wird abgekühlt und zu Granulat vermahlen.

Bei den Vergleichsbeispielen I bis III werden die Rohstoffe gemäß Tabelle 2 in einer Gesamtmenge von 1,2 kg in einer 5-l-Kugelmühle 15 h vermahlen.

### B) Anwendungstechnische Prüfungen

### Herstellung der Prüfkörper

Die Prüfkörper werden durch Pressen in 170°C heiße Preßformen erhalten. Die Preßmasse wird hierbei zuerst tablettiert und die Tabletten mittels Hochfrequenz auf ca. 80°C vorgewärmt. Die Härtungszeit beträgt 8 Minuten.

### Prüfungen

### Dauerwärmebeständigkeit

3 1/2 min bei 170°C ausgehärtete Prüfkörper (4 × 10 × 60) werden 15 h bei 160°C nachgehärtet und nachher bei 160, 180, 200 und 225°C gelagert. Dabei wird die Gewichtsverlust-Veränderung verfolgt. Aus den erhaltenen Resultaten werden die Temperaturen bestimmt, bei denen der Gewichtsverlust nach 5000 Stunden Einlagerung 5 Gew.-% beträgt und diese Werte als Maß der Dauerwärmebeständigkeit verwendet.

### Entformungssteifigkeit

Diese wird an Prüfkörpern (10 × 15 × 120), die im Spritzpreßverfahren in einer 170°C heißen Preßform hergestellt werden, bestimmt. Die heißen Prüfkörper werden dabei innerhalb von 5 sec nach dem Öffnen der Preßform herausgenommen, auf zwei Stützen mit einem Abstand von 100 mm gelegt und in der Mitte mit 5 kg belastet. Nachher wird nach 60 sec die Durchbiegung des Stabes mit Hilfe eines Indikators abgelesen. Die gemessenen Werte dienen als Maß der Steifigkeit im Moment der Entformung.

**0 012 714**

### Rißbeständigkeit

Zwei mit Methylenchlorid entfettete Stahlplättchen (Abmessung 4 × 30 × 60 mm) werden zunächst in der 170° C heißen Preßform vorgewärmt. Danach wird im Spritzpreßverfahren zunächst eine Seite mit einer 1,5 mm dicken und dann von der anderen Seite mit einer 2,5 mm dicken Formmassenschicht umhüllt. Die Formmasse wird in Form von 60 g bis 70 g schweren Tabletten eingesetzt. Der unhüllte Formkörper ist so gestaltet, daß an gegenüberliegenden Seiten je zwei durch Epoxidharz getrennte Ecken des Metallplättchens nicht umhüllt sind. Die Preßzeit beträgt 3 min, wonach die Prüfkörper auf Raumtemperatur abgekühlt werden.

Die Klassifizierung der Rißbeständigkeit ergibt sich aus Abkühlungstests, die in nachfolgender Tabelle 1 zusammengefaßt sind.

Tabelle 1

| | |
|---|---|
| Reißt innerhalb 1 h nach Entformung | 5 |
| Reißt innerhalb 4 h | 4 |
| Reißt innerhalb 24 h | 3 |
| Reißt beim Abkühlen von Raumtemperatur auf 0° C im Eiswasser ($\frac{1}{2}$ h) | 2 A |
| Reißt nach $\frac{1}{2}$ h Erwärmen bei 100° C und Abkühlen auf 0° C im Eiswasser ($\frac{1}{2}$ h) | 2 B |
| Reißt nach Abkühlen von Raumtemperatur auf −20° C ($\frac{1}{4}$ h in Alkohol/Trockeneis) | 1 A |
| Reißt nach Abkühlen von Raumtemperatur auf −40° C ($\frac{1}{4}$ h in Alkohol/Trockeneis) | 1 B |
| Keine Risse nach allen Schockstufen | 0 |

Die Prüfergebnisse sind in der nachfolgenden Tabelle 2 zusammengefaßt.

6

Tabelle 2

| | Beispiel 1 | 2 | 3 | 4 | 5 | 6 | 7 | I | II | III | IV | V |
|---|---|---|---|---|---|---|---|---|---|---|---|---|
| Zusammensetzung (Gew.-%) | | | | | | | | | | | | |
| Epoxidharz A | 18,2 | 18,2 | 18,2 | 18,2 | 18,8 | 14,0 | 10,0 | 19,0 | 19,0 | 19,5 | — | 11,7 |
| Epoxidharz B | — | — | — | — | — | 4,0 | 2,8 | — | — | — | 16,0 | — |
| Epoxidharz C | — | — | — | — | — | — | 6,0 | — | — | — | — | — |
| Härter A | 6,5 | 6,5 | 6,5 | 6,5 | — | 7,0 | — | — | — | — | 8,5 | — |
| Härter B | — | — | — | — | 5,9 | — | — | — | — | — | — | — |
| Härter C | — | — | — | — | — | — | — | 6,0 | 6,0 | — | — | — |
| Härter D | — | — | — | — | — | — | — | — | — | 5,5 | — | — |
| Härter E | — | — | — | — | — | — | — | — | — | — | — | 13,0 |
| Härter F | — | — | — | — | — | — | 5,8 | — | — | — | — | — |
| Beschleuniger | 0,3 | 0,3 | 0,3 | 0,3 | 0,3 | 0,3 | 0,4 | — | — | — | 0,5 | 0,3 |
| Quarzmehl | 73,4 | — | 62,4 | — | — | — | — | 62,4 | — | — | — | — |
| Naturwollastonit | — | 73,4 | — | 62,4 | 62,4 | 58,1 | 60,2 | — | 62,4 | 62,4 | 62,4 | 58,1 |
| Glasfasern | — | — | 11 | 11 | 11 | 11 | 13,0 | 11 | 11 | 11 | 11 | 11 |
| Melamin-Formaldehyd-Harz (1) | — | — | — | — | — | 4 | — | — | — | — | — | — |
| Wachs | 1,1 | 1,1 | 1,1 | 1,1 | 1,1 | 1,1 | 1,3 | 1,1 | 1,1 | 1,1 | 1,1 | 1,1 |
| Gasruß | 0,5 | 0,5 | 0,5 | 0,5 | 0,5 | 0,5 | 0,5 | 0,5 | 0,5 | 0,5 | 0,5 | 0,5 |

Fortsetzung

Prüfresultate

| | Beispiel | | | | | | | | | | | |
| --- | --- | --- | --- | --- | --- | --- | --- | --- | --- | --- | --- | --- |
| | 1 | 2 | 3 | 4 | 5 | 6 | 7 | I | II | III | IV | V |
| Rißbeständigkeit | 2 B | 0 | 0 | 0 | 0 | 0 | 0 | 5 | 5 | 4 | 5 | – |
| Dauerwärm-beständigkeit (°C) | 180 | 180 | – | – | – | – | 180 | 170 | 170 | 160 | 180 | – |
| Entformungs-steifigkeit (mm) | 2,2 | 2,5 | 2,1 | 2,3 | 2,2 | 1,9 | 2,6 | 3,0 | 3,2 | 4,2 | 1,9 | – |

(1) Melopas P, (2) OP Wachs (Hoechst).

Aus Tabelle 2 ist ersichtlich, daß bei den erfindungsgemäßen Formmassen durchweg eine hohe Rißbeständigkeit gefunden wird im Vergleich zu den Beispielen I und II (vgl. US-PS 3 996 175) und III (vgl. US-PS 3 963 666), Beispiel IV (höhermolekulares Bisphenol-A-Epoxidharz) und V (Anhydridhärtung).

Die Dauerwärmeformbeständigkeit und Entformungssteifigkeit ist gleich oder besser.

Die Formmasse von Vergleichsbeispiel V konnte nicht verarbeitet werden, da sie in der Preßform klebt und die Formlinge nicht zu entfernen sind.

### Patentansprüche

1. Epoxidformmasse aus (a) einem festen, einen Schmelzpunkt von mindestens 50° C aufweisenden Epoxidharz, das ein Addukt aus einem niedermolekularen Diglycidyläther der Bisphenole und einem aromatischen Diamin ist und das mindestens 2,0 Epoxidäquivalente pro kg Harz enthält, wobei gegebenenfalls bis zu 50% des Epoxidharzes (a) durch andere, bei Zimmertemperatur feste Epoxidharze ersetzt werden können, (b) einem Härter, (c) mindestens einem Härtungsbeschleuniger und (d) mindestens einem Füllstoff in einer Menge von 10 bis 80 Gew.-%, bezogen auf die Formmasse, dadurch gekennzeichnet, daß als Härter (b) mindestens ein aromatisches Polyol mit mehr als 5 Hydroxyläquivalenten pro kg Polyol und mit einem Schmelzpunkt von mindestens 50° C in einer Menge einverleibt ist, daß auf eine Epoxidgruppe 0,5 bis 1,5 Hydroxylgruppen entfallen.

2. Formmasse gemäß Anspruch 1, dadurch gekennzeichnet, daß das aromatische Polyol ein Novolak ist.

3. Formmasse gemäß Anspruch 2, dadurch gekennzeichnet, daß es sich um einen Phenol-, Resorcin-, Kresol- oder Xylenolnovolak oder um einen Novolak aus Mischungen dieser Phenole handelt.

4. Formmasse gemäß Anspruch 1, dadurch gekennzeichnet, daß das aromatische Polyol ein hydroxyphenylierter Kohlenwasserstoff ist.

5. Formmasse gemäß Anspruch 4, dadurch gekennzeichnet, daß das aromatische Polyol 1,1,2,2-Tetrahydroxyphenyläthan, 1,1,3-Trihydroxyphenylpropan oder Poly-p-Vinylphenol ist.

6. Formmasse gemäß Anspruch 2, dadurch gekennzeichnet, daß der Novolak mit einem aromatischen oder aliphatischen Polyol abgemischt ist.

7. Formmasse gemäß Anspruch 1, dadurch gekennzeichnet, daß als Füllstoff Wollastonit in mindestens zwei Drittel der Gesamtfüllstoffmenge enthalten ist und als Rest der Gesamtfüllstoffmenge Glasfasern.

8. Formmasse gemäß Anspruch 1, dadurch gekennzeichnet, daß der Härtungsbeschleuniger (c) in einer Menge von 0,1 bis 5 enthalten ist, bezogen auf die Formmasse.

9. Formmasse gemäß Anspruch 1, dadurch gekennzeichnet, daß das Epoxidharz ein Addukt aus einem niedermolekularen Bisphenol-A-Diglycidyläther und 4,4'-Diaminodiphenylmethan ist.

10. Formmasse gemäß Anspruch 1, dadurch gekennzeichnet, daß sie zusätzlich bis zu 8 Gew.-% eines Melaminformaldehydharzes enthält, bezogen auf die Formmasse.

11. Formkörper aus gehärteten Formmassen gemäß Anspruch 1.

12. Verwendung von Formmassen gemäß Anspruch 1 zur Herstellung von Formkörpern durch Härtung.

### Claims

1. An epoxy resin moulding composition consisting of (a) a solid epoxy resin which is an adduct of a low molecular diglycidyl ether of bisphenols and an aromatic diamine and which has a melting point of at least 50° C and contains at least 2.0 epoxy equivalents per kg of resin, up to 50% of which epoxy resin (a) may be replaced by other solid epoxy resins which are solid at room temperature, (b) a hardener, (c) at least one accelerator and (d) at least one filler in an amount of 10 to 80% by weight, based on the moulding compositions, said epoxy resin composition containing, as hardener (b), at least one aromatic polyol containing more than 5 hydroxyl equivalents per kg of polyol and having a melting point of at least 50° C, and in an amount such that the content of hydroxyl groups per epoxy group is 0.5 to 1.5.

2. A moulding composition according to claim 1, wherein the aromatic polyol is a novolak.

3. A moulding composition according to claim 2, wherein the novolak is a phenol, resorcinol, cresol or xylenol novolak or a mixture of these phenols.

4. A moulding composition according to claim 1, wherein the aromatic polyol is a hydroxyphenylated hydrocarbon.

5. A moulding composition according to claim 4, wherein the aromatic polyol is 1,1,2,2-tetrahydroxyphenylethane, 1,1,3-trihydroxyphenylpropane or poly-p-vinylphenol.

6. A moulding composition according to claim 2, wherein the novolak is mixed with an aromatic or aliphatic polyol.

7. A moulding composition according to claim 1, wherein at least two-thirds of the total amount of filler consists of wollastonite and the remainder consists of glass fibres.

8. A moulding composition according to claim 1 which contains the accelerator (c) in an amount of 0.1 to 5% by weight, based on the moulding composition.

9. A moulding composition according to claim 1, wherein the epoxy resin is an adduct of a low molecular bisphenol A-diglycidyl ether and 4,4'-diaminodiphenylmethane.

10. A moulding composition according to claim 1 which additionally contains up to 8% of a melamine formaldehyde resin, based on the moulding composition.

11. Mouldings made from a cured moulding composition according to claim 1.

12. The use of a moulding composition according to claim 1 for obtaining mouldings by curing.


## Revendications

1. Matière à mouler époxydique constituée de (a) une résine époxyde solide ayant un point de fusion d'au moins 50°C, qui est un produit d'addition d'un éther diglycidylique à faible masse moléculaire de bis-phénols et d'une diamine aromatique et qui comprend au moins 2 équivalents d'époxyde par kg de résine, éventuellement jusqu'à 50% de cette résine (a) pouvant être remplacés par d'autres résines époxydes solides à la température ordinaire, (b) un durcisseur, (c) un ou plusieurs accélérateurs de durcissement et (d) une ou plusieurs charges dans une proportion de 10 à 80% du poids de la matière à mouler, matière caractérisée en ce qu'elle contient comme durcisseur (b) un ou plusieurs polyols aromatiques à plus de 5 équivalents hydroxyliques par kg de polyol, ayant un point de fusion d'au moins 50°C, dans une proportion telle qu'il y ait de 0,5 à 1,5 hydroxyle par groupe époxy.

2. Matière à mouler selon la revendication 1, caractérisée en ce que le polyol aromatique est une novolaque.

3. Matière à mouler selon la revendication 2, caractérisée en ce qu'il s'agit d'une novolaque de phénol, de résorcinol, de crésol ou de xylénol, ou d'une novolaque d'un mélange de ces phénols.

4. Matière à mouler selon la revendication 1, caractérisée en ce que le polyol aromatique est un hydrocarbure hydroxyphénylé.

5. Matière à mouler selon la revendication 4, caractérisée en ce que le polyol aromatique est le 1,1,2,2-tétrahydroxy-phényl-éthane, le 1,1,3-trihydroxy-phénylpropane ou un poly-p-vinyl-phénol.

6. Matière à mouler selon la revendication 2, caractérisée en ce que la novolaque est mélangée avec un polyol aromatique ou aliphatique.

7. Matière à mouler selon l'une quelconque des revendications précédentes, caractérisée en ce qu'elle contient comme charge de la wollastonite à raison d'au moins les deux tiers de la quantité totale de charge, et pour la partie restante des fibres de verre.

8. Matière à mouler selon l'une quelconque des revendications précédentes, caractérisée en ce que la proportion de l'accélérateur de durcissement (c) est de 0,1 à 5% du poids de la matière.

9. Matière à mouler selon la revendication 1, caractérisée en ce que la résine époxyde est un produit d'addition d'un éther diglycidylique du Bisphénol-A à faible masse moléculaire et de 4,4'-diamino-diphényl-méthane.

10. Matière à mouler selon l'une quelconque des revendications précédentes, caractérisée en ce qu'elle comprend en outre jusqu'à 8% en poids d'une résine mélamineformaldéhyde.

11. Objets moulés en matières durcies selon l'une quelconque des revendications précédentes.

12. Utilisation des matières à mouler selon l'une quelconque des revendications 1 à 10 pour la fabrication d'objets moulés par durcissement.